# EUROPÄISCHE PATENTANMELDUNG

(11) **EP 0 834 692 A1**
(43) Veröffentlichungstag der Anmeldung: **08.04.1998**
(21) Anmeldenummer: 97250294.2
(22) Anmeldetag: 29.09.1997
(51) Int. Cl.: F16L 55/162, C09K 3/12

(54) **Behandlungsmittel zum nachträglichen Abdichten von Dichtungen in Gas-Innenrohrleitungen**

(30) Priorität: 02.10.1996 DE 19642077
(71) Anmelder: Klieboldt, Wilhelm, D-36323 Grebenau (DE)
(72) Erfinder: Klieboldt, Wilhelm, D-36323 Grebenau (DE)
(74) Vertreter: Meys, Hildegard, Dr.rer.nat.

(57) **Zusammenfassung**

Es wird ein Behandlungsmittel zum nachträglichen Abdichten von Gas-Innenrohrleitungen, insbesondere von Gewindeverbindungen in solchen Gasleitungen von Hausinstallationen beschrieben, das in relativ kurzer Einwirkungszeit eine dauerhafte Abdichtung der einbauseitig vorhandenen Gewindedichtungen und eventuellen Fugendichtungen zu bewirken vermag, ohne daß die Leitungsrohrinnenwandungen und/oder die Gewindehandhabung beeinträchtigt werden. Bei dem erfindungsgemäßen Behandlungsmittel handelt es sich um ein viskosflüssiges Kunststoff-Lösungsmittel-Gemisch, das aus einer wässrigen, vorteilhafterweise mit entkalktem Wasser hergestellten Polyvinylalkohol-Dispersion mit Glykol und/oder Glycerin besteht und Zusätze wie Entschäumungs-, Konservierungs- und farbgebende Bestandteile enthalten kann.

## Beschreibung

Die Erfindung betrifft ein Behandlungsmittel zum nachträglichen Abdichten von Dichtungen an bzw. in Gas-Innenrohrleitungen, insbesondere Gewinde- und evt. Fingen-Dichtungen in solchen Gasleitungen. Das erfindungsgemäße Mittel liegt in viskos-flüssiger Form als ein Kunststoff-Lösungsmittel-Gemisch vor.

Es ist bekannt, daß Gasleitungen, die einbauseitig aus Fasermaterial, wie z.B. Hanf bestehende Dichtungen aufweisen, nach gewissen Zeit undicht werden, weil das Fasermaterial durch die die Leitungen durchströmenden Gase austrocknet und schrumpft. Undichtigkeiten bedeuten nicht nur materiellen Schaden infolge Gasverlusten, sondern müssen insbesondere aus Sicherheitsgründen vermieden oder jedenfalls möglichst umgehend behoben werden.

Es ist wünschenswert, daß solche Undichtigkeiten möglichst unkompliziert und dauerhaft behoben werden.

Der Erfindung liegt die Aufgabe zugrunde, ein Mittel zur Verfügung zu stellen, mit dem die für diese Zwecke bekannten bauseitig in solchen Leitungsrohren eingebauren Dichtungsmaterialien behandelt werden können, und das in relativ kurzer Einwirkungszeit eine dauerhafte Abdichtung zu bewirken vermag, ohne daß die Leitungsrohrinnenwandungen und/oder die Gewindehandhabung beeinträchtigt werden.

Diese Aufgabe wird mit dem wie im Anspruch 1 gekennzeichneten erfindungsgemäßen Behandlungmittel gelöst, wobei sich dieses wie in den Unteransprüchen angegeben noch weiter vorteilhaft ausgestalten läßt.

Das erfindungsgemäße Behandlungsmittel ist ein Kunststoff-Lösungsmittel-Gemisch mit mindestens teilhydrolisiertem Polyvinylalkohol als Kunststoff-Bestandteil, welcher als wässrige Dispersion eingesetzt wird, sowie Glykol und/oder Glycerin als Lösungsmittel-Bestandteilen. Das erfindungsgemäße Mittel hat die Eigenschaft, schnell und problemlos, bei einmaliger Anwendung, undichte Stellen an einbauseitig vorhandenen Gasleitungsdichtungen nachträglich mit Sicherheit abzudichten. Die Leitungen sind nach der Behandlung mit dem erfindungsgemäßen Mittel unmittelbar gasdicht und können sofort wieder in Betrieb genommen werden.

Durch den Lösungszustand des mindestens teilhydrolisierten Polyvinylalkohol-Bestandteils im erfindungsgemäßen Mittel vermag dieser Kunststoff-Bestandteil tief in das Fasermaterial des bauseitig vorhandenen undicht gewordenen Dichtungsfasermaterials und in eventuell vorhandene Gewinde- und Fugenspalten einzudringen und insbesondere die Fasern von Dichtungshanf zu durchtränken und zu umhüllen, so daß diese wieder in ihren ursprünglichen Zustand aufzuquellen vermögen, nachdem sie zuvor durch das sehr trockene Gas, das im Betrieb die z.B. Hausinstallations-Gasrohre durchströmt, ausgetrocknet und damit undicht geworden waren. Durch den z.B. Glycerin-Bestandteil des erfindungsgemäßen Mittels bleibt der gequollene Zustand der Hanffasern bei der Wiederinbetriebnahme der Gasleitung praktisch dauerhaft erhalten, weil ein Austrocknen des mit dem erfindungsgemäßen Mittel behandelten Dichtungshanf durch z.B. sehr trockenes Stadtgas nicht mehr erfolgt. Der Polyvinylalkohol-Bestandteil des erfindungsgemäßen Mittels bildet mit Abgabe des Wasser-Bestand teils um die Fasern des Dichtungshanfs und eventuell auf der Rohrwandungs-Innenfläche einen gut haftenden, gasdichten, aber hochelastischen Film; Glycerin-Anteile haben Weichmacher-Effekt auf Polyvinylalkoholharz-Bestandteile, so daß die Film-Elastizität praktisch dauerhaft erhalten bleibt. Alterungs- und/oder Versprödungs-Effekte sind unter normalen Gebrauchsbedingungen nicht zu befürchten, auch dann nicht, wenn das relativ trockene Gas mit der Zeit den Wasser-Anteil des erfindungsgemäßen Mittels wieder sozusagen vollständig aus dem Gasleitungssystem austrägt. Es ist besonders zweckmäßig, den Polyvinylalkohol-Bestandteil im erfindungsgemäßen Mittel dispergiert und/oder gelöst in enthärtetem bzw. entkalktem Wasser einzusezten. Wie sich gezeigt hat, kann unter ungünstigen Arbeitsbedingungen bei Verwendung von relativ hoch-kalkhaltigen Wässern, sogenannten harten Wässern, die Gefahr von Kalkabscheidungen an den Faserstoff-Anteilen des einbauseitigen Gewindedichtungsmaterials bestehen, wodurch sich im ungünstigen Fall auf die Dauer verringerte Elastizität einstellen kann, was unerwünscht ist. Wenn jedoch zwecks Entfernung von Kalk behandeltes Wasser im erfindungsgemäßen Mittel vorhanden ist, treten derartige Folgeerscheinungen mit Sicherheit nicht auf. Verfahren zum Aufbereiten von Wasser zwecks Entfernen von Kalk sind dem Fachmann bekannt, wie beispielsweise Wasserenthärtungsverfahren mittels elektrischen Strom oder magnetische Wasserbehandlungsverfahren.

Die Anwendung des erfindungsgemäßen Mittels erfolgt mit für dieses Einsatzgebiet an sich bekannten Gerätschaften und in dafür üblicher Verarbeitungsweise.
Wenn die vorschriftsmäßig (entsprechend DVGW 624) erfolgte Leckmengenbestimmung ergeben hat, daß eine z.B. Gasleitung in einer Hausinstallation vermindert funktionsfähig geworden ist, wird diese Leitung in bekannter Weise vorbereitet, wozu die Gaszufuhr abgesperrt, Gaszähler und angeschlossene Gasgeräte demontiert und dann die Gasleitung mit Stickstoff oder Druckluft durchgeblasen werden.

Danach wird, zweckmäßig aus einem Druckbehälter oder einem sonstigen geeigneten Füllgerät, das erfindungsgemäße Behandlungsmittel in die Leitung eingefüllt und die befüllte Leitung einige Stunden unter Druck gehalten. Nach Druckentlastung wird die Leitung entleert und wiederum mit Stickstoff oder Druckluft ausgeblasen und danach vorteilhaft eine zeitlang, zweckmäßig über Nacht, offen und drucklos trocknen gelassen. Nach dem daraufhin folgenden Wiederanschließen der demontierten Geräte und des Gaszählers kann die nun wieder dichte Leitung erneut in Betrieb genommen werden.

Das erfindungsgemäße Behandlungsmittel läßt sich durch einfaches Zusammenmischen der Einzelbestandteile fertigen.

Als Polyvinylalkohol-Bestandteil eignen sich handelsübliche Polyvinylalkohol-Produkte, sowohl die teilhydrolisierten als auch die vollhydrolisierten Typen, wie sie beispielsweise unter der Handelsbezeichnung "Mowiol" von der Firma Hoechst vertrieben werden. Der Polyvinylalkohol-Bestandteil bewirkt durch seine gute Adhäsion zu Fasern die Haftfestigkeit des erfindungsgemäßen Mittels an dem einbauseitig vorhandenen Dichtungsmaterial der Leitungen und den bleibenden Schutz dieses Materials vor erneutem Austrocknen.

Es hat sich als zweckmäßig erwiesen, eine teilhydrolisierte Polyvinylalkoholsorte mit einem hohen Hydrolysegrad von 87 - 88 Mol-% einzusetzen, weil dieses Produkt sich einerseits vergleichsweise schneller in Wasser löst bzw. dispergieren läßt als vollhydrolisierte Polyvinylalkoholsorten, andererseits in wässriger Dispersionslösung einen günstigeren pH-Wert hat als teilhydrolisierte Polyvinylalkoholsorten mit niedrigeren Hydrolysegraden.

Es werden im erfindungsgemäßen Mittel weiterhin als Bestandteile die merhwertigen Alkohole Glykol und/oder Glycerin eingesetzt. Da das Glykol an sich bis zu einem gewissen Grad giftig ist, sollte es dem erfindungsgemäßen Mittel für Hausgasleitungen nur in Zumischung zu Glycerin und in relativ geringem Zusatzanteil beigegeben werden. Es empfiehlt sich, Glycerin alleine als mehrwertigen Alkohol-Bestandteil zu verwenden, wenn der eingesetzte Polyvinylalkohol-Bestandteil eine relativ geringere Molekülgrösse und demzufolge dessen wässrige Lösung eine relativ geringere Viskosität hat. Andererseits kann ein Anteil an Glykol vorteilhaft sein, weil Glykol zusätzlich Wirkung als Antischäumer ergibt.

Es hat sich als besonders zweckmäßig erwiesen, das erfindungsgemäße Mittel in Form eines Gemisches aus
- 20%iger: wässriger Dispersionslösung eines teilhydrolisierten Polyvinylalkohols mit einem Hydrolysegrad von 87,6 - 87,8 Mol -%
und
- Glycerin: im Volumenverhältnis von 1 : 1
mit
- 0,1 Gew.-%: Entschäumer,
- 0,1 Gew.-%: Konservierungsmittel, und
- 0,3 Gew.-%: Pigmentfarbstoff in Teigform
einzusetzen.
Ein solches erfindungsgemäßes Mittel hat eine für die Verarbeitung günstige Fließfähigkeit sowie die gewünschte gute Lagerstabilität, und es ergibt die angestrebte Dichtwirkung nach einmaligem Einsatz.

Als Entschäumer eignen sich für diese Zwecke an sich bekannte Produkte, z.B. n-Octanol und Tributylphosphat, oder Handelsprodukte, wie "Dehydron" und "Antigan".

Als Konservierungsmittel eignen sich für diese Zwecke bekannte Handelsprodukte, wie beispielsweise die "Mergal"-Typen K9N und K 10.

Als Farbstoffe eignen sich für diese Zwecke bekannte Handelsprodukte, z.B. in Teigform unter der Handelsbezeichnung "Colanyl" vertriebene Pigmentfarbstoffe, wie Litholechtgelb, Eisenrot, Paliogenblau oder Heliogengrün.

Im folgenden wird der Einsatz des erfindungsgemäßen Behandlungsmittels und die damit erzielten Ergebnisse anhand eines Beispiels noch näher erläutert:

Nach den vorbereitenden Arbeiten, Ausbauen von Gaszähler und Abtrennen der Gasgeräte und dem Ausblasen von Staub, wurde eine mit Faserdichtungen auf Hanfbasis als Gewindedichtungen bestückte Gasleitung einer Hausinstallation, deren verminderte Gebrauchsfähigkeit festgestellt worden war, mit dem erfindungsgemäßen Behandlungsmittel, und zwar einem Gemisch aus
20%iger wässriger Dispersionslösung eines Polyvinylalkohols (Handelsprodukt "Mowiol 4-88") mit einer Viskosität (nach DIN 53015) von 4 ± 0,5 mPa · s;
einem Hydrolysegrad von 87,7 ± 1,0 Mol.-%;
einem Aschegehalt von max. 0,5%;
   und
Glycerin
im Volumenverhältnis von 1 : 1 mit
0,3 Gew.-% Paliogenblau in Teigform als farbgebender Zusatz
0,1 Gew.-% Tributylphosphat als Entschäumer und
0,1 Gew.-% "Mergal" K 10 als Konservierungsmittel,
befüllt.

Anschließend wurde dieses Kunststoff-Lösungsmittel-Gemisch über einen Zeitraum von 3 Stunden mit einem Überdruck von 4 bar in der Leitung gehalten und dabei in die undichten Gewindeverbindungen der Leitung eingepreßt. Dann wurde das überschüssige Behandlungsmittel abgelassen und durch Molchen mit einem Schaumstoffpfropfen aus den behandelten Leitungsabschnitten der Hausinstallation entfernt. Danach wurde die abgedichtete Leitung einer erneuten Dichtheitsprüfung unterzogen. Die Prüfwerte sind in der nachstehenden Tabelle zusammengestellt.

**Tabelle**

| Prüfergebnisse der Typprüfung nach DIN 30659 an der wie zuvor beschrieben behandelten Leitung | |
|---|---|
| Dichtheitsprüfung | Nach dem Abdichten war die Leitung bei einem Prüfdruck von 110 mbar gasdicht. |
| Alterungsbeständigkeit | Bei 120stündiger Behandlung bei 23°C mit 100 l/h über Kieselsäure getrockneter Luft war die Leitung gasdicht. Bei 1000stündiger künstlicher Alterung bei 50^{o}C war die Leitung gasdicht. |
| Beständigkeit gegen Vibration | Nach Vibrationsprüfung war die Leitung gasdicht. |
| Prüfung der Lösbarkeit der Verbindung | Die Leitungsgewinde ließen sich mit handelsüblichen Werkzeugen ohne Beschädigung lösen. Das Dichtmittel war nach Abschluß der Prüfung noch plastisch/elastisch. |
| Beurteilung | Die Typprüfung nach DIN 30 659 ergab, daß alle Anforderungen der Norm erfüllt wruden. |

Da sich die abgedichtete Leitung als gasdicht erwiesen hatte, konnten die abgetrennten Geräte wieder eingebaut und die Leitung wieder in Betrieb genommen werden.

Die Ergebnisse zeigen, daß das erfindungsgemäße Behandlungsmittel sich nach nachträglichen Abdichten von bauseitig vorhandene Gewindedichtungen auf Faserbasis aufweisenden Gas-Innenleitungen hervorragend eignet und den sicherheitstechnischen Anforderungen dafür entspricht.

## Patentansprüche

1. Behandlungsmittel zum nachträglichen Abdichten von bauseitig in Gas-Innenrohrleitungen vorhandenen Dichtungen auf Faserbasis, insbesondere von Gewindedichtungen in Gasleitungen von Hausinstallationen, gekennzeichnet durch ein viskosflüssiges Kunststoff-Lösungsmittel-Gemisch, das aus den beiden Bestandteilen
a) eine wässrige Dispersionslösung aus mindestens teilhydrolisiertem Polyvinylalkohol und
b) einem unter Normalbedingungen flüssigen mehrwertigen Alkohol oder einem Gemisch solcher Alkohole
besteht.

2. Mittel nach Anspruch 1, dadurch gekennzeichnet, daß teilhydrolisierter Polyvinylalkohol mit einem Hydrolysegrad von 87 - 88 Mol.-% vorhanden ist.

3. Mittel nach Anspruch 1 oder 2, dadurch gekennzeichnet, daß der Polyvinylalkohol-Bestandteil als 20%ige wässrige Dispersionslösung in entkalktem bzw. enthärtetem Wasser vorhanden ist.

4. Mittel nach Anspruch 1 bis 3, dadurch gekennzeichnet, daß als mehrwertiger Alkohol-Bestandteil Glykol und/oder Glycerin vorhanden ist.

5. Mittel nach Anspruch 1 bis 4, dadurch gekennzeichnet, daß das Kunststoff-Lösungsmittel-Gemisch aus volumengleichen Anteilen einer 20%igen wässrigen Polyvinylalkohol-Dispersionslösung und Glycerin besteht.

6. Mittel nach Anspruch 1 bis 5, dadurch gekennzeichnet, daß das Gemisch ein an sich bekanntes Konservierungsmittel als Zusatz enthält.

7. Mittel nach Anspruch 1 bis 6, dadurch gekennzeichnet, daß das Gemisch ein an sich bekanntes Entschäumungsmittel als Zusatz enthält.

8. Mittel nach Anspruch 1 bis 7, dadurch gekennzeichnet, daß das Gemisch einen farbgebenden Zusatz enthält.

9. Mittel nach Anspruch 1 bis 8, dadurch gekennzeichnet, daß das Gemisch besteht aus
20%iger wässriger Dispersionslösung eines teilhydrolisierten Polyvinylalkohols mit einem Hydrolysegrad von 87,6 - 87,8 Mol.-%, hergestellt mit entkalktem Wasser
und
Glycerin
im Volumenverhältnis von 1 : 1, sowie Zusatz von
0,1 Gew.-% Entschäumungsmittel,
0,1 Gew.-% Konservierungsmittel, und
0,3 Gew.-% Pigmentfarbstoff in Teigform enthält.
